# EUROPEAN PATENT APPLICATION

(11) **EP 3 984 362 A1**
(43) Date of publication of application: **20.04.2022**
(21) Application number: 20826940.7
(22) Date of filing: 15.06.2020
(51) Int. Cl.: A01N 43/16, A01G 7/00, A01P 21/00

(54) **PLANT VITALIZER CONTAINING CELLO-OLIGOSACCHARIDE, AND USE FOR SAID PLANT VITALIZER**

(30) Priority: 17.06.2019 JP 2019112247
(71) Applicant: Showa Denko K.K., Tokyo 105-8518 (JP)
(72) Inventor: FUJITA, Ichiro, Tokyo 105-8518 (JP); SAITO, Makoto, Tokyo 105-8518 (JP); UCHIDA, Hiroshi, Tokyo 105-8518 (JP); KIMOTO, Hisashi, Awara-shi, Fukui 919-0621 (JP)
(74) Representative: Strehl Schübel-Hopf & Partner
(86) International application number: PCT/JP2020/023469
(87) International publication number: WO 2020/255933

(57) **Abstract**

Physiological processes in plants are regulated and reinforced, and crop vitality, yield, quality and post-harvesting storage life are improved. A plant vitalizer that includes a cellooligosaccharide is applied to the plants.

## Description

### FIELD

The present invention relates to a plant vitalizer comprising a cellooligosaccharide, and to a method of cultivating and producing plants using the plant vitalizer.

### BACKGROUND

Plants suffer reduction in yields due to abiotic stress due to daylight hours, atmospheric temperature and rainfall, and biological stress such as pests. Various types of fertilizers and agricultural chemicals have been used in the prior art to increase yields, especially of agricultural crops. Fertilizers are nutrients that are required for plant growth, but they lack functions for alleviating stress. Agricultural chemicals directly eliminate pests that parasitize plants and thus eliminate biological stress, but the safety of using agricultural chemicals has not been adequately confirmed, and concerns remain regarding the effects of their excess consumption on the human body and on the environment, while chemical agents such as agricultural chemicals produced by chemical synthesis methods are especially concerning in terms of their dispersion and residence for long periods in soil, and consequently other methods are desired to provide resistance against biological stress. The use of biostimulants has also been a subject of interest in recent years, since they are substances that are safe for the human body and the environment.

The term "biostimulant", sometimes synonymous with "plant vitalizer", refers to a component that contains a substance group or microorganism and, when applied to the plant body or its root system, stimulates the series of processes that take place in the plant body in its natural state, thereby improving nutrient absorption, increasing fertilization efficiency, providing stress resistance and improving quality, while not having a direct effect against pests so that it is not classified as an insecticide or microbicide. In other words, it is a component found in the natural world (including microorganisms), as a substance which is not a plant hormone or nutrient but, even in small amounts, stimulates plant activity and promotes growth. Applying a biostimulant to a plant increases nutrient absorption and nutrient utilization in the plant, promoting its growth and improving the yield and quality of crops. Agricultural biostimulants include various formulations such as compounds, substances or other products that act on plants or soil to regulate and reinforce physiological processes in crops. Biostimulants act on plant physiology by a different route than that of nutrients to improve crop vitality, yield, quality and post-harvesting storage life.

Biostimulants can therefore stimulate the innate abilities of plants and promote their growth without causing problems associated with conventional agricultural chemicals or fertilizers.

Previous publications related to such biostimulants have contained descriptions of: plant vitalizers that combine chitin oligosaccharides with chitosan which has antimicrobial activity (PTL 1), plant vitalizers combining oligosaccharides and plant extract components in vinegar (PTL 2), plant growth accelerators that include cellulose (PTL 3), plant growth regulators that include hexofuranose derivatives (PTL 4), a method of increasing plant disease resistance using low molecularized chitin or chitosan (PTL 5), and fertilizers containing chitin and/or chitosan (PTL 6).

### [CITATION LIST]

### [PATENT LITERATURE]

[PTL 1] Japanese Unexamined Patent Publication HEI No. 9-143013
[PTL 2] Japanese Unexamined Patent Publication No. 2001-64112
[PTL 3] Japanese Unexamined Patent Publication No. 2002-114610
[PTL 4] Japanese Unexamined Patent Publication No. 2013-151438
[PTL 5] Japanese Unexamined Patent Publication No. 2015-48436
[PTL 6] Japanese Unexamined Patent Publication No. 2017-95352
[PTL 7] International Patent Publication No. 2017/104687

### SUMMARY

### [TECHNICAL PROBLEM]

The problem to be solved by the invention is to regulate and reinforce physiological processes in plants, and improve crop vitality, yield, quality and post-harvesting storage life.

### [SOLUTION TO PROBLEM]

As a result of diligent research and experimentation with the aim of solving this problem, the present inventors have completed this invention upon finding, surprisingly, that cellooligosaccharides promote plant growth and increase elicitor activity for the plant.

Specifically, the present invention provides the following.
[1] A plant vitalizer comprising a cellooligosaccharide.
[2] The plant vitalizer according to [1], wherein the content of the cellooligosaccharide in the plant vitalizer is 0.05 to 10 mass%.
[3] The plant vitalizer according to [1] or [2], which further comprises a xylooligosaccharide.
[4] The plant vitalizer according to [3], wherein the total content of the cellooligosaccharide and xylooligosaccharide in the plant vitalizer is 0.05 to 10 mass%.
[5] The plant vitalizer according to [3] or [4], wherein the mass ratio of the cellooligosaccharide with respect to the xylooligosaccharide in the plant vitalizer is 0.5 to 2.
[6] The plant vitalizer according to any one of [1] to [5], which further comprises a spreading agent.
[7] A plant cultivation method, which comprises applying a plant vitalizer according to any one of [1] to [6] to a plant.
[8] The method according to [7], which comprises applying the plant vitalizer to a plant at a concentration so that the total content of the oligosaccharide is 0.1 to 500 ppm by mass.
[9] The method according to [7] or [8], wherein the plant vitalizer is applied to the plant by foliar application.
[10] A method of producing a plant or a part thereof having increased elicitor activity compared to the same without application of a plant vitalizer according to any one of [1] to [6], wherein the method comprises cultivating the plant by the method according to any one of [7] to [9].
[11] The method according to [10], wherein the elicitor activity is determined by measuring glucanase production in the plant.
[12] A fertilizer composition comprising a plant vitalizer according to any one of [1] to [6].

### [ADVANTAGEOUS EFFECTS OF INVENTION]

According to the invention it is possible to regulate and reinforce physiological processes in plants without causing problems such as effects on the human body or environment as are caused by conventional agricultural chemicals or fertilizers, and to improve crop vitality, yield, quality and post-harvesting storage life.

### DESCRIPTION OF EMBODIMENTS

According to a first aspect of the invention, a plant vitalizer comprising a cellooligosaccharide is provided.

The term "plant vitalizer" according to the invention includes not only substances that have effects of alleviating abiotic stresses such as temperature, light, water and salts that are involved in the growth of plants, but also effects of alleviating biological stresses such as pests.

According to the invention, the cellooligosaccharide is used as a plant substance elicitor (hereunder, "endogenous elicitor").

The term "elicitor" generally refers to a substance that induces a biological defense reaction in a higher plant tissue or cultured cells, whereby it induces disease resistance by plant immunomechanisms. Plants are sensitive to elicitors by receptors present on leaf surfaces, initiating pathogen resistance reactions. This induces biological defense activity (immunity) in which various compounds are secreted against different pathogenic organisms. When an elicitor acts on a plant, it induces defense reactions such as synthesis and accumulation of phytoalexins and infection-specific proteins, production of active oxygen species, production of active nitrogen species, hypersensitive reactive cell death, and changes in gene expression, these reactions being thought to protect the plant from pathogenic organisms and increase disease resistance.

Phytoalexins are antimicrobial compounds synthesized and accumulated in the plant body due to action of elicitors, and the antimicrobial compounds produced differ depending on the plant variety. Typical phytoalexins include flavonoids, terpenoids and fatty acid derivatives. Active oxygen species have activity that kills pathogenic microorganisms, while active oxygen and active nitrogen species, either alone or in coordination, function as signals to initiate various defense reactions. The disease resistance provided by such elicitor effects helps to augment resistance against a wide range of diseases, and it is therefore expected to be useful for agriculture.

Cellooligosaccharides are oligosaccharides polymerized by β-glycoside bonding of multiple glucose molecules, and in recent years they have been found to have functionality including moisture retention, stickiness inhibition, freshness functionality, starch aging reduction and protein denaturation inhibition, for which they are expected to have uses in the fields of medicine, cosmetics, foods and feed. In particular, cellooligosaccharides with a glucose polymerization degree of 3 or greater are even more promising in terms of increasing the functionality mentioned above and also providing new functionality. The cellooligosaccharides currently used in industry are produced by enzyme reaction, but their main components are glucose and dimeric cellobioses, whereas they contain almost no trimeric cellotriose or greater oligomers. In recent years, however, the present applicants have reported a method for producing cellooligosaccharides that comprise oligomers with a glucose polymerization degree of 3 to 6, in hydrolysis reaction of vegetable biomass using a carbon catalyst, by carrying out hydrothermal reaction while controlling the temperature-elevating rate, cooling rate, reaction temperature and reaction time (PTL 7).

When a cellooligosaccharide is to be obtained by hydrolysis of cellulose, it is preferred to use crystalline fine powdered cellulose such as AVICEL (product of Merck), or cotton linter pulp, as the cellulose starting material.

Cellooligosaccharides to be used for the invention are most preferably ones having the following chemical structure.

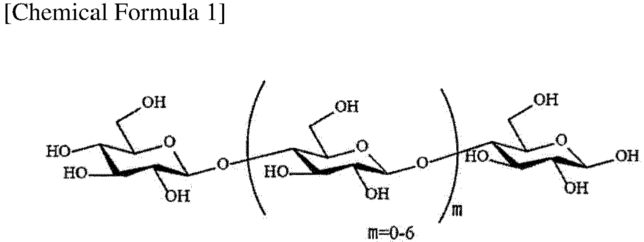

The plant vitalizer of the invention preferably further contains a xylooligosaccharide as an endogenous elicitor.

Xylooligosaccharides are oligosaccharides polymerized by β-glycoside bonding of multiple xylose molecules, and they are generally obtained by hydrolysis of xylan as the main component of hemicellulose, being marketed mainly for comestible purposes.

Xylooligosaccharides to be used for the invention are most preferably ones having the following chemical structure.

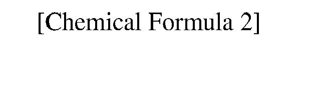

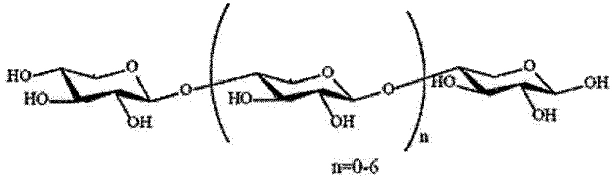

The plant vitalizer of the invention may be prepared as a product in any form such as powder, granules or liquid, but it is generally preferred to be in easily dispersible liquid form. The plant vitalizer of the invention may be supplied as a stock solution obtained by dissolving the cellooligosaccharide, and the xylooligosaccharide when used, at high concentration in a solvent such as water. The total content of the cellooligosaccharide and xylooligosaccharide in the plant vitalizer stock solution is preferably 0.05 to 10 mass%, more preferably 0.1 to 8 mass% and even more preferably 0.5 to 6 mass%. According to another embodiment, the total content of the cellooligosaccharide and xylooligosaccharide in the plant vitalizer stock solution is preferably 1 to 15 mass%, more preferably 3 to 12 mass% and even more preferably 5 to 10 mass%. When the plant vitalizer does not include a xylooligosaccharide, the total content is the content of the cellooligosaccharide in the plant vitalizer stock solution.

When the plant vitalizer of the invention includes the aforementioned xylooligosaccharide, the mass ratio of the cellooligosaccharide with respect to the xylooligosaccharide in the plant vitalizer (cellooligosaccharide content/xylooligosaccharide content) is preferably 0.5 to 2, more preferably 0.6 to 1.5 and even more preferably 0.8 to 1.2. As another embodiment, the mass ratio of the cellooligosaccharide with respect to the xylooligosaccharide is preferably 0.2 to 1.5, more preferably 0.3 to 1.2 and even more preferably 0.4 to 1.

The plant vitalizer of the invention may also contain components other than the oligosaccharides as active components, such as antiseptic agents, spreading agents, anti-settling agents, thickeners and fillers. Antiseptic agents include potassium sorbate, paraoxybenzoic acid esters, benzoin, sodium dehydroacetate, hinokitiol, phenoxyethanol, polyaminopropyl biguanide and polylysine. Spreading agents are viscous liquids composed mainly of surfactants, and they are not particularly restricted so long as they can be used as spreading agents for plant vitalizers, examples including polyoxyethylene nonylphenyl ethers, sorbitan fatty acid esters and polyoxyethylene hexitan fatty acid esters. Anti-settling agents include polyphosphoric acid and polyphosphoric acid salts, or polycarboxylic acid-type polymer surfactants. Thickeners include carboxymethyl cellulose (CMC), polyacrylamide, water-soluble polymers such as starch, or molasses, alcohol fermentation concentrate waste liquids and amino acid fermentation concentrate waste liquids. Fillers include lactose and starch.

According to a second aspect of the invention there is provided a plant cultivation method that comprises applying a plant vitalizer of the invention to a plant.

Plants to which a plant vitalizer of the invention is to be applied are not particularly restricted but will typically be crops, such as plants of the family Compositae, Solanaceae, Brassicaceae, Poaceae, Leguminosae, Rosaceae, Cucurbitaceae, Convolvulaceae, Chenopodiaceae, Liliaceae, Umbelliferae, Malvaceae, Zingiberaceae or Nelumbonaceae.

Specifically, these include Brassicaceae plants such as Chinese cabbage, cabbage, broccoli, cauliflower, komatsuna, mizuna, Japanese radish and turnip, Solanaceae plants such as potato, tomato, eggplant, bell pepper, capsicum, shishito and tobacco, Compositae plants such as crowndaisy, lettuce, leaf lettuce, burdock and butterbur, Cucurbitaceae plants such as watermelon, melon, pumpkin, cucumber, nigauri, loofah and gourd, Chenopodiaceae plants such as spinach, chard, Swiss chard, okahijiki and beet, Umbelliferae plants such as ginseng, celery, parsley and mitsuba, Leguminosae plants such as soybean (green soybean), adzuki bean, green bean, horse-bean, pea, winged-bean and peanut, Convolvulaceae plants such as sweet potato and water spinach, Liliaceae plants such as Chinese chive, Welsh onion, onion, garlic and asparagus, Rosaceae plants such as strawberry, apple, pear and loquat, Malvaceae plants such as okra and cotton, Zingiberaceae plants such as ginger, Nelumbonaceae plants such as lotus, and Poaceae plants such as corn, rice, barley, wheat and sugarcane.

Of these, Brassicaceae plants such as cabbage and komatsuna, Solanaceae plants such as tomato and eggplant, Compositae plants such as lettuce and leaf lettuce and Rosaceae plants such as strawberry and apple are preferred, with komatsuna and tomato being more preferred.

The plant vitalizer of the invention will generally be used after dilution to a desired concentration (such as 1000-fold dilution) by addition of water or the like to the stock solution, and applied to a plant at a concentration so that the total content of the oligosaccharides in the plant vitalizer is preferably 0.1 to 500 ppm by mass. It may also be applied to a plant in a concentration so that the total content of oligosaccharides in the plant vitalizer is preferably 0.5 to 200 ppm by mass and more preferably 1 to 100 ppm by mass.

Application of the plant vitalizer to a plant may be by any method commonly used by those skilled in the art without any particular restriction on the dispersion method, examples including a method of direct dispersion onto the leaves or stems of the plant, a method of dispersion into culture medium or soil in which the plant is to be cultivated, or a method of mixing into fertilizer and then dispersion into culture medium or soil. For mixing into fertilizer, the type of fertilizer is not restricted and may be chemical fertilizer comprising nitrogen, phosphoric acid and potassium, or organic fertilizer containing oil residue, fish residue, bone powder, sea weed powder, amino acids, saccharides or vitamins. The dispersion method is most preferably carried out by foliar application, as this will allow the elicitor activity to be effectively exhibited. Foliar application may be carried out by a method commonly known to those skilled in the art, using a mechanical power atomizer, shoulder atomizer, broadcaster, sprayer, manned or unmanned helicopter, duster or hand sprayer.

When the plant vitalizer is to be dispersed after mixing with a fertilizer, the content of the cellooligosaccharide is preferably 5 to 40 mass% and more preferably 10 to 25 mass%, with respect to 100 solid mass% of the fertilizer composition. When the plant vitalizer includes a xylooligosaccharide, the content of the xylooligosaccharide is preferably 5 to 40 mass% and more preferably 10 to 25 mass%, with respect to 100 solid mass% of the fertilizer composition. The fertilizer composition more preferably also comprises at least one nutrient selected from among nitrogen, phosphoric acid and potassium, and more preferably comprises all three nutrients nitrogen, phosphoric acid and potassium, in addition to the cellooligosaccharide and xylooligosaccharide. In the case of a liquid fertilizer, the fertilizer composition contains water at preferably 70 to 99 mass% and more preferably 75 to 99 mass%, and preferably the stock solution is diluted 100-fold to 1000-fold before dispersion.

By cultivating the plant using this method, it is possible to produce a plant or a part thereof (for example, root, stem, leaf, flower, fruit, seed, tissue or cells) having elicitor activity compared to the same without application of a plant vitalizer, and to thus improve crop vitality, yield, quality and post-harvesting storage life.

As mentioned above, the elicitor effect is important as one index of disease resistance, but the present inventors have found that the elicitor activity can be evaluated based on glucanase production, as a signal of the elicitor effect, by measuring its enzyme activity. A portion of the leaves of a plant being cultivated may be harvested to analyze the glucanase activity, allowing periodic evaluation of the same individual.

The following is a summary of the procedure for a method of evaluating elicitor activity:
(i) The plant is sampled and pretreated; (ii) a calibration curve is drawn using BSA as the protein standard (using absorbance at a wavelength (600 nm) in a dye binding method); (iii) the protein concentration of the specimen prepared in (i) is measured; (iv) the glucanase activity of the specimen prepared in (i) is measured. Specifically, the activity is evaluated as the absorbance value at a wavelength of 590 nm, using a B-HS reagent that exhibits color when soluble low molecular decomposition products are freed by glucanase; and (v) the glucanase activity is calculated in terms of protein units.

The specific procedure for evaluation of the elicitor activity is explained in detail below in the Examples.

These Examples serve merely for concrete illustration of the invention and are not intended to be limitative on the invention.

### EXAMPLES

### [1. Preparation of oligosaccharides]

### (1) Cellooligosaccharide

A 10 g portion of AVICEL (crystalline fine powder cellulose by Merck) and 1.5 g of BA50 active carbon (product of Ajinomoto Fine-Techno Co. Inc.) were placed in a 3600 mL-volume ceramic pot mill together with 2000 g of alumina spheres with diameters of 1.5 cm, and this was set in a desktop pot mill rotating table (ANZ-51S Desktop Pot Mill by Nitto Kagaku Co., Ltd.), carrying out treatment for 48 hours at 60 rpm to obtain a reaction starting material. The temperature was initially room temperature, and temperature increase was allowed to proceed by shear heat release.

Next, 0.374 g of the reaction starting material and 40 mL of water were placed in a high pressure reactor (100 mL internal volume, autoclave by OM Labotech Co., hastelloy C22), after which they were heated to a reaction temperature of 230°C at 10 to 30°C/min (average temperature-elevating rate: 11.3°C/min) while stirring at 600 rpm, the heating was abruptly stopped, and the reactor was air-cooled at 10 to 30°C/min (average temperature-lowering rate: 16.7°C/min) to prepare a reaction mixture.

Supernatant recovered from the reaction mixture using a centrifuge apparatus was then freeze-dried to obtain cellooligosaccharide powder.

### (2) Xylooligosaccharide

Xylooligosaccharide 95P by B Food Science Co., Ltd. was used.

### [2. Measurement of tomato plant dry weight and root dry weight]

### (1) Preparation of plant vitalizer

Each oligosaccharide prepared in [1. Preparation of oligosaccharide] was dissolved in water while stirring with a stirrer in a compositional ratio to 1000 times the plant vitalizer concentration (ppm by mass) in Examples 1 to 6 listed in the tables, after which the bacteria were removed with a 0.45 µm filter, to obtain plant vitalizer stock solutions. Each stock solution was diluted 1000-fold with water and used for the following cultivation test.

### (2) Cultivation test

After immersing tomato seeds in distilled water for 6 hours, the horny layer was removed and the seeds were dried in an aerated location for 30 minutes. After then placing 10 seeds each in different culture dishes inlaid with absorbent paper, they were immersed for 6 hours after filling each culture dish with plant vitalizer solution under each of the conditions. Next, 3 seeds of equal size were selected from each culture dish, planted according to the different conditions, and cultivated for 11 days. The plant dry weights and root dry weights for the germinated seeds were measured and compared with the same without application of the plant vitalizer (Comparative Example 1). The plant dry weights were measured by cutting the root parts, directly drying the remaining top parts with a constant temperature dryer for 12 hours at 50°C. The root parts were also thoroughly washed of accretions and their weights were measured after drying with a constant temperature dryer for 12 hours at 50°C.

**[Table 1]**

| | | | Comp. Example 1 | Example 1 | Example 2 | Example 3 | Example 4 | Example 5 | Example 6 |
|---|---|---|---|---|---|---|---|---|---|
| Conditions | Plant vitalizer concentration (ppm by mass) | | 0 | 20 | 40 | 80 | 100 | 200 | 400 |
| | Endogenous elicitor | Cellooligosaccharide | - | 100% | 100% | 100% | 100% | 100% | 100% |
| | | Xylooligosaccharide | - | | | | | | |
| Results | Plant dry weight (mg) | | 38 | 42 | 48 | 52 | 50 | 54 | 50 |
| | | | 100% | 111% | 126% | 137% | 132% | 142% | 132% |
| | Root dry weight (mg) | | 7 | 16 | 17 | 23 | 22 | 23 | 13 |
| | | | 100% | 229% | 243% | 329% | 314% | 329% | 186% |

### [3. Evaluation of komatsuna elicitor activity - 1]

### (1) Preparation of plant vitalizer

Each oligosaccharide prepared in [1. Preparation of oligosaccharide] was dissolved in water while stirring with a stirrer in a compositional ratio to 1000 times the plant vitalizer concentration (ppm by mass) in Examples 7 and 8 listed in the tables, after which the bacteria were removed with a 0.45 µm filter, to obtain plant vitalizer stock solutions. Each stock solution was diluted 1000-fold with water and used for the following cultivation test.

### (2) Preparation of MS medium

Murashige and Skoog (MS) agar medium was used for raising of the komatsuna. The prepared plant vitalizers were added to the MS medium to the final concentrations indicated for each of the Examples and Comparative Examples, and then autoclaved for 20 minutes at 121°C.

### (3) Seeding and growing method

High-pressure steam sterilized MS medium was transferred into a plant box on a clean bench and thoroughly cooled, and then komatsuna ("Wakami", Sakata Seed Corp.) were seeded in a count of 10 each. They were then grown for 6 days with long-day conditions of 24 hours in a lighted room at 22°C.

### (4) Protein extraction

A protein extraction buffer with the following composition was prepared.

**[Table 2]**

| Protein extraction buffer | | |
|---|---|---|
| Reagent name | Volume (mol) | Remark |
| 0.2 M Phosphate buffer (pH 6.0) | 1.25 ml | |
| 5.0 M NaCl | 0.3 ml (150 mM) | |
| 0.5 M EDTA2Na | 20 µl (1 mM) | |
| 60% Glycerol | 1.7 ml | May be 99-100% purity product |
| Triton X-100 | 0.1 ml | Surfactant |
| 1 M DTT | 10 µl (1 mM) | |
| 25 x Protease inhibitor | 0.4 ml | 1 Tablet/2 ml H₂O |
| H₂O | 6.22 ml | Ultrapure water |
| Total | 10 ml | |

After adding 300 µl of the prepared protein extraction buffer into a 1.5 ml tube equipped with a Biomasher (Nippi, Inc.), leaves (plant body) sampled and cut with scissors to approximately 4 × 4 mm were added. The procedure was carried out 5 times for each sample. A stirring rod was then rotated by hand to break up the plant body until the solid portion was generally no longer visible. Centrifugal separation was carried out under conditions of 15,000 × g, 10 minutes, 4°C, and the aqueous layer was collected into a fresh 1.5 ml tube to prepare a liquid extract.

### (5) Adjustment of protein concentration

A 2 mg/ml portion of bovine serum albumin (BSA) of known purity was serially diluted (1/2, 1/4, 1/8, 1/16, 1/32 and 1/64 dilution) to prepare standards. The prepared standards were used to determine the average absorbance at 600 nm (Abs600), and a calibration curve was drawn (n = 3). After injecting 300 µl of Coomassie Brilliant Blue (CBB) solution into a 96-well plate, 6 µl of the prepared liquid extract was added. The Abs600 was then measured. The blank used was MilliQ. The absorbance of the liquid extract was fitted onto the calibration curve drawn with the 2 mg/ml of serially diluted BSA, to determine the protein concentration.

When the measured Abs600 value of the liquid extract fell outside of the calibration curve, it was measured again with appropriate dilution using ultrapure water (MilliQ) to determine the protein concentration.

Dilution was carried out to a constant liquid extract concentration using the determined values, and the diluted extract was used for the following glucanase activity measurement.

### (6) Glucanase activity measurement

In a 1.5 ml tube there were mixed 100 µl of a B-HS substrate solution prepared by suspending one tablet of B-HS reagent (Megazyme Co.) in 10 ml of MilliQ, 50 µl of 0.2 M phosphate buffer solution (pH 6.0) and 50 µl of the previously prepared diluted solution or ultrapure water (blank), to prepare samples for each of the Comparative Examples and Examples. Enzyme reaction was conducted for 1 hour and 30 minutes in a water bath at 30°C, shaking the sample well every 15 minutes. A 100 µl portion of 0.2 N NaOH as reaction stop solution (total: 300 µl) was added to stop the reaction. Centrifugal separation was carried out under conditions of 15,000 rpm, 5 minutes, and then 200 µl of the supernatant was dispensed into a 96-well plate and the absorbance at 590 nm (Abs590) was measured to evaluate the glucanase activity, comparing it with the same without application of the plant vitalizer (Comparative Example 2).

**[Table 3]**

| | | | Comparative Example 2 | Example 7 | Example 8 |
|---|---|---|---|---|---|
| Conditions | Plant vitalizer concentration (ppm by mass) | | 0 | 10 | 10 |
| | Endogenous elicitor | Cellooligosaccharide | - | 100% | 50% |
| | | Xylooligosaccharide | - | - | 50% |
| Results | Elicitor activity | | 22 | 29 | 34 |
| | | | 100% | 132% | 155% |

### [4. Evaluation of komatsuna elicitor activity - 2]

### (1) Preparation of plant vitalizer

Each oligosaccharide prepared in [1. Preparation of oligosaccharide] was dissolved in water while stirring with a stirrer in a compositional ratio to 1000 times the plant vitalizer concentration (ppm by mass) in Examples 9 and 10 listed in the tables, after which the bacteria were removed with a 0.45 µm filter, to obtain plant vitalizer stock solutions. Each stock solution was diluted 1000-fold with water and used for the following cultivation test.

After preparing a komatsuna protein extract in the same manner as [3. Evaluation of komatsuna elicitor activity - 1], the glucanase activity was measured and compared with the same without application of a plant vitalizer (Comparative Example 3).

**[Table 4]**

| | | | Comparative Example 3 | Example 9 | Example 10 |
|---|---|---|---|---|---|
| Conditions | Plant vitalizer concentration (ppm by mass) | | 0 | 20 | 40 |
| | Endogenous elicitor | Cellooligosaccharide | - | 100% | 50% |
| | | Xylooligosaccharide | - | - | 50% |
| Results | Elicitor activity | | 35 | 42 | 55 |
| | | | 100% | 120% | 157% |

## Claims

1. A plant vitalizer comprising a cellooligosaccharide.

2. The plant vitalizer according to claim 1, wherein the content of the cellooligosaccharide in the plant vitalizer is 0.05 to 10 mass%.

3. The plant vitalizer according to claim 1 or 2, which further comprises a xylooligosaccharide.

4. The plant vitalizer according to claim 3, wherein the total content of the cellooligosaccharide and xylooligosaccharide in the plant vitalizer is 0.05 to 10 mass%.

5. The plant vitalizer according to claim 3 or 4, wherein the mass ratio of the cellooligosaccharide with respect to the xylooligosaccharide in the plant vitalizer is 0.5 to 2.

6. The plant vitalizer according to any one of claims 1 to 5, which further comprises a spreading agent.

7. A plant cultivation method, which comprises applying a plant vitalizer according to any one of claims 1 to 6 to a plant.

8. The method according to claim 7, which comprises applying the plant vitalizer to a plant at a concentration so that the total content of the oligosaccharide is 0.1 to 500 ppm by mass.

9. The method according to claim 7 or 8, wherein the plant vitalizer is applied to the plant by foliar application.

10. A method of producing a plant or a part thereof having increased elicitor activity compared to the same without application of a plant vitalizer according to any one of claims 1 to 6, wherein the method comprises cultivating the plant by the method according to any one of claims 7 to 9.

11. The method according to claim 10, wherein the elicitor activity is determined by measuring glucanase production in the plant.

12. A fertilizer composition comprising a plant vitalizer according to any one of claims 1 to 6.
